# EUROPEAN PATENT APPLICATION

(11) **EP 4 574 544 A1**
(43) Date of publication of application: **25.06.2025**
(21) Application number: 24220530.0
(22) Date of filing: 17.12.2024
(51) Int. Cl.: B60L 53/16, B60K 15/04, H01R 13/00

(54) **CHARGE LID MODULE FOR AN ELECTRIC VEHICLE**

(30) Priority: 19.12.2023 IT 202300027282
(71) Applicant: CEBI ITALY S.p.A., 12025 Dronero (CN) (IT)
(72) Inventor: SERPELONI, Angelo, INDAIATUBA (SP) (BR); CASTRO, Wesley, SALTO (SP) (BR)
(74) Representative: Baldi, Claudio

(57) **Abstract**

A charging socket module for an electric vehicle comprises: a housing (1) with a bottom (10) wherein an electric charging connector connected to an electric power supply is installed for charging the vehicle's batteries, a lid (2) hinged to the housing (1) by means of a hinge (C), an actuator (5) suitable for locking the lid (2) in closed position and for unlocking the lid (2) in order to open it, and a spring (9) that pushes the lid (2) to an open position; a lever (8) protrudes radially from the shaft (4) of the hinge, and the spring (9) is a helical spring having a first end (90a) attached to the lever (8) and a second end (90b) attached to the housing (1).

## Description

The present invention relates to a lid module for a vehicle, and in particular to a lid suitable for opening and closing a housing used for electrically charging the vehicle.

Vehicle lid modules are known, which comprise a housing and a lid hinged to the housing. The housing is provided with an opening that is suitable for accommodating an electric charging connector, in communication with an electrical power supply of the vehicle. An actuator locks the lid in closed position.

EP3348432A1, in the name of the same applicant, discloses an actuator for a lid lock comprising a roto-translating pin with a T-shaped head that engages the lid.

Such types of actuators are known as "push-push" actuators. Otherwise said, when the lid is closed, the user pushes the lid and the actuator unlocks the lid. Then a spring pushes the lid to the open position.

Generally, a spiral leaf spring is arranged in the hinge of the lid. When the lid is closed, the spring is spirally wound around the hinge and is loaded. When the actuator unlocks the lid, the spring is unloaded, causing a rotation of the lid around the axis of the hinge; and therefore the lid opens. When the user pushes the lid to the closed position, the spring is loaded and remains loaded while the lid is closed.

The fact that the spring remains loaded while the lid is closed is a drawback, as the spring exerts a high traction force on the actuator that keeps the lid closed. In the long run, such a constant force on the actuator will damage the actuator, requiring its replacement.

Such a problem is more pronounced in the charge lid modules of electric vehicles because the lid is considerably larger and heavier than a fuel tank lid. In fact, the spring that pushes a charge lid of an electric vehicle must generate a higher thrust force compared to a spring that is used to push a fuel tank lid.

US2013/076059A1 discloses a charge port door of an electric vehicle according to the preamble of claim 1.

The purpose of the present invention is to eliminate the drawbacks of the prior art by providing a charge lid module for an electric vehicle that is reliable and durable.

Another purpose is to provide such a charge lid module for an electric vehicle that is versatile and efficient.

A further purpose is to provide such a charge lid module for an electric vehicle that is quick and easy to install, as well as user-friendly.

These purposes are achieved in accordance with the invention with the features of the appended independent claim 1.

Advantageous achievements of the invention appear from the dependent claims.

Further features of the invention will appear clearer from the following detailed description, which refers to a purely illustrative and therefore non-limiting embodiment, illustrated in the appended drawings, wherein:
Fig. 1 is a perspective top view of a module according to the invention;
Fig. 2 is a perspective bottom view of the module according to the invention;
Fig. 3 is a left-hand side view of the module according to the invention;
Fig. 4 is a right-hand side view of the module according to the invention;
Fig. 5 is an axial sectional view of a portion of the module according to the invention, taken along the axis of the hinge;
Fig. 6 is a cross-sectional view taken along the section plane VI-VI of Fig. 5;
Figs. 7A, 7B and 7C are partially sectioned left-hand side views, illustrating the lid in open position, in semi-open position and in closed position, respectively;
Figs. 8A, 8B and 8C are partially sectioned right-hand side views, illustrating the lid in open position, in semi-open position and in closed position, respectively.

With the aid of the Figures, the charge lid module for an electric vehicle according to the invention is described, which is comprehensively denoted by reference numeral 100.

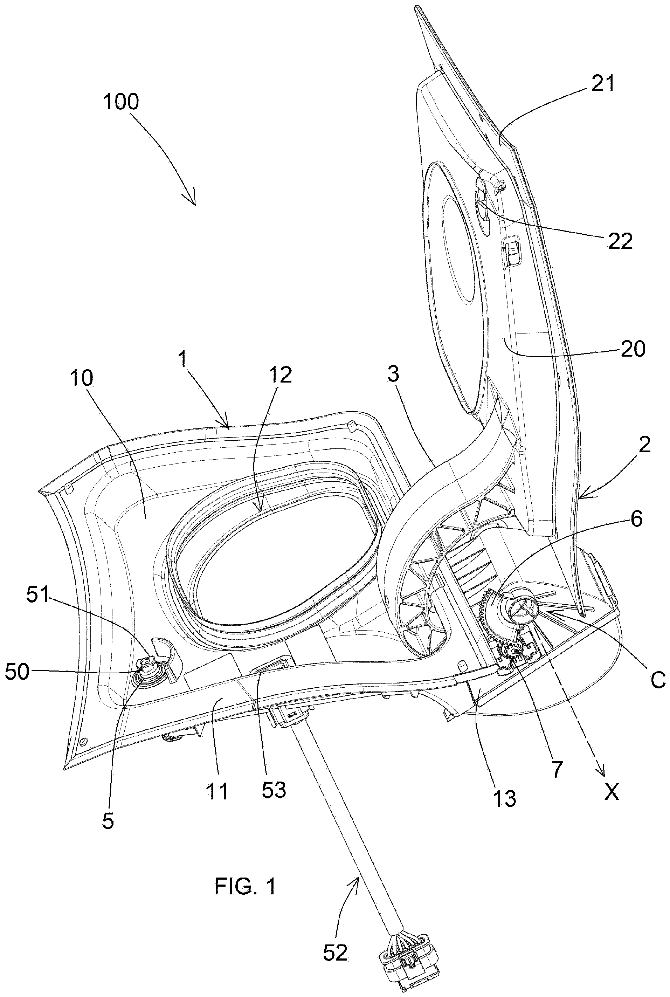

With reference to Fig. 1, the module (100) comprises a housing (1) and a lid (2) connected to an arm (3) hinged to the housing (1).

The housing (1) is in the form of a parallelepiped box having a bottom (10) and a perimeter edge (11) against which the lid (2) is stopped, in such a way to close the housing (1).

The bottom (10) of the housing is provided with a slot (12) wherein an electric charging connector that is electrically connected to a vehicle electric power supply is installed for charging the vehicle's batteries.

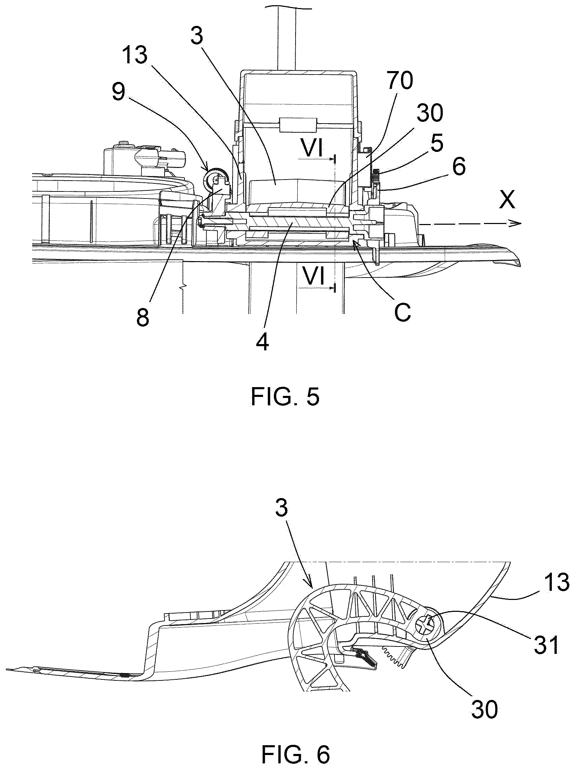

Referring to Figs. 5 and 6, the arm (3) has a C-shaped curved shape, and ends with a cylindrical shank (30) that is integral with a shaft (4) by means of keys (31).

The shaft (4) of the arm of the lid is rotatably mounted in a box (13) integral with the housing (1). In this way, the shaft (4) of the arm of the lid can rotate about its axis (X) generating a hinge (C) having the axis (X) of the shaft (4) of the arm of the lid as axis of rotation.

Going back to Fig. 1, the arm (3) is connected to a flange (20) that supports a plate (21) suitable for abutting against the perimeter edge (11) of the housing.

The lid (2) can rotate about the axis (X) of the hinge (C) in such a way to go from an open position, wherein the housing (1) can be accessed by the user, to a closed position, wherein the plate (21) of the lid abuts against the perimeter edge (11) of the housing, thus closing the housing (1). Therefore the lid (2) can perform a rotation of approximately 110°.

The module (100) comprises an actuator (5) mounted in the housing (1) in opposite position to the hinge (C).

The actuator (5) operates as a lock latch in order to lock the lid (2) in closed position. For such a purpose, the actuator (5) comprises a roto-translating pin (50) having a T-shaped head (51) suitable for engaging in a seat (22) of the lid (2) to lock the lid in closed position. The seat (22) is formed in the support flange (20) of the lid.

The roto-translating pin (50) is driven by an electric motor by means of a gear train. The electric motor of the actuator (5) is powered by an electric cable (52) connected to an electric connector (53) mounted in the housing (1).

The roto-translating pin (5) can go to an extended open position, wherein the lid can be opened, and to a retracted closed position, wherein the lid is closed.

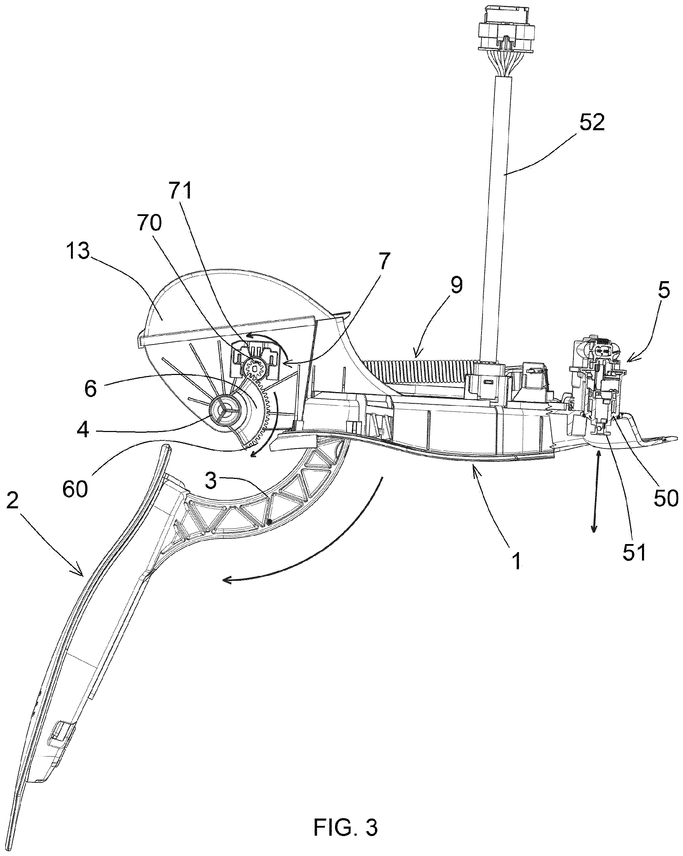

With reference to Figs. 1, 3 and 5, a gear (6) is mounted on the shaft (4). The gear (6) comprises a gear wheel portion having a toothing (60) that extends for a central angle of 70°-180°, preferably 90°.

The gear (6) is disposed outside the case (13) of the hinge, by way of example on a left-hand side of the box (13). The gear (6) can rotate integrally with the shaft (4) around the axis (X) of the hinge (C) during the rotation of the arm (3) of the lid from the closed position to the open position and vice versa.

A damper (7) meshes with the gear (6). The damper (7) dampens the rotational movement of the gear (6) during the movement of the arm (3) of the lid.

The damper (7) comprises a gear wheel (70) having a smaller diameter than the diameter of the gear (6). The toothed wheel (70) of the damper is mounted on a support (71) mounted on the box (13). When the damper (7) is present, the opening speed of the lid is constant even though the force exerted by the spring is different during the movement of the lid.

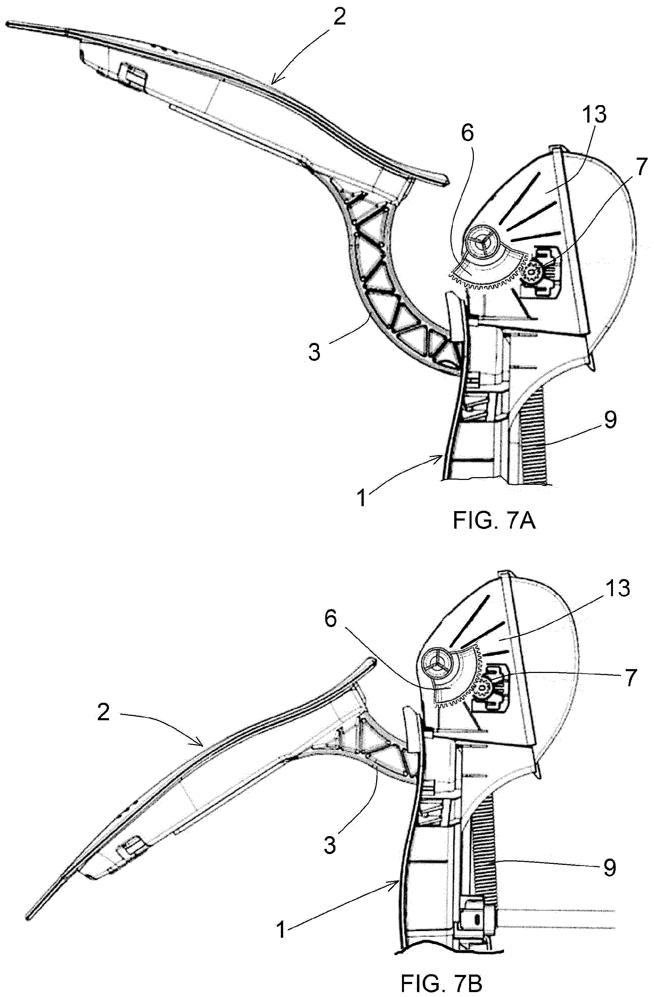

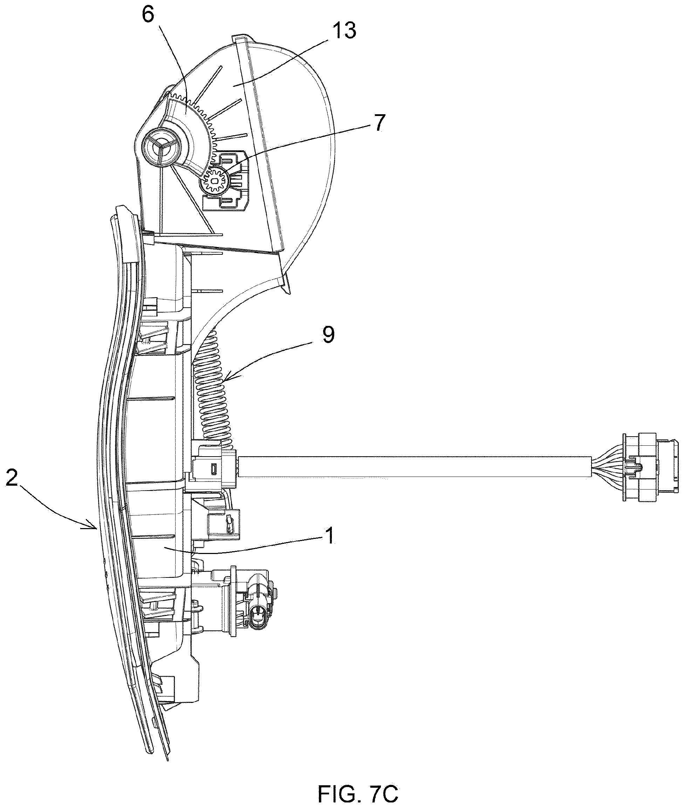

Figs. 7A, 7B and 7C illustrate the position of the gear (6) when the lid is open, semi-open and closed, respectively.

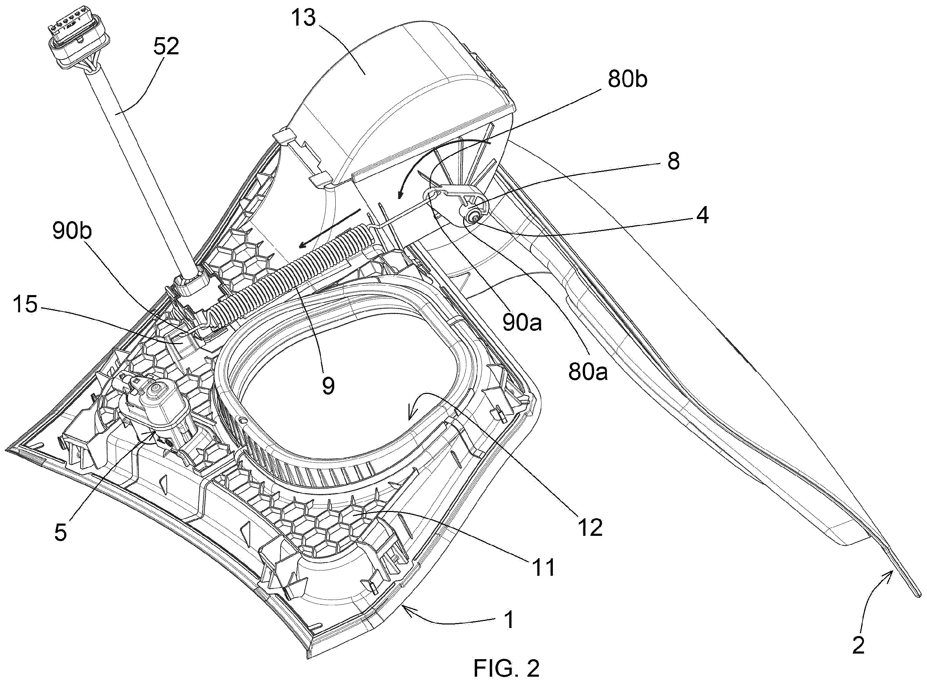

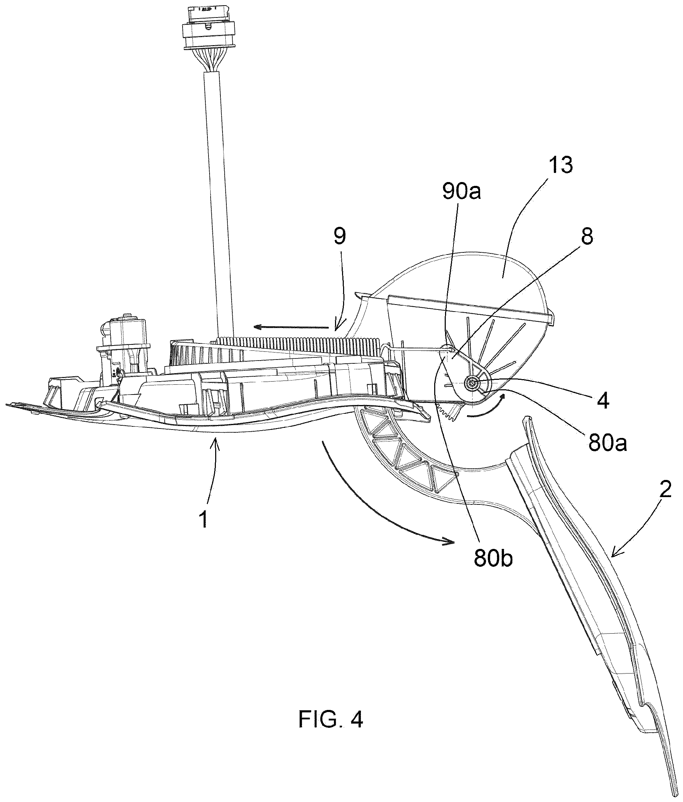

Referring to Figs. 2, 4 and 5, a lever (8) is mounted on the shaft (4). The lever (8) is disposed outside the box (13) of the hinge, on the side opposite to the side where the gear (6) is. By way of example, the lever (8) is disposed on a right-hand side of the box (13). The lever (8) protrudes radially from the shaft (4) and can rotate integrally with the shaft (4) about the axis (X) of the hinge (C) during the rotation of the arm (3) of the lid from the closed position to the open position and vice versa.

The lever (8) is connected to a spring (9). The lever (8) has a first end (80a) attached to the shaft (4) of the arm of the lid and a second end (80b) attached to the spring (9).

The spring (9) has a first end (90a) attached to the second end (80b) of the lever and a second end (90b) attached to a bracket (15) that protrudes inferiorly from the bottom (11) of the housing.

The spring (9) is a helical spring that extends under the bottom (10) of the housing, in lateral position relative to the slot (12) of the housing.

When the lid (2) is open, the spring (9) is unloaded. When the lid (2) is closed, the lever (8) rotates, tensioning and loading the spring (9). In view of the above, when the lid (2) is closed, the spring (9) is loaded. When the actuator (5) unlocks the lid, the spring is unloaded and compressed, thus pulling the lever (8) which causes a rotation of the shaft (4) and consequently a rotation of the arm (3) and the lid (2) which is arranged in the open position.

In order to close the lid, the user pushes the lid to the closed position, loading the spring (9).

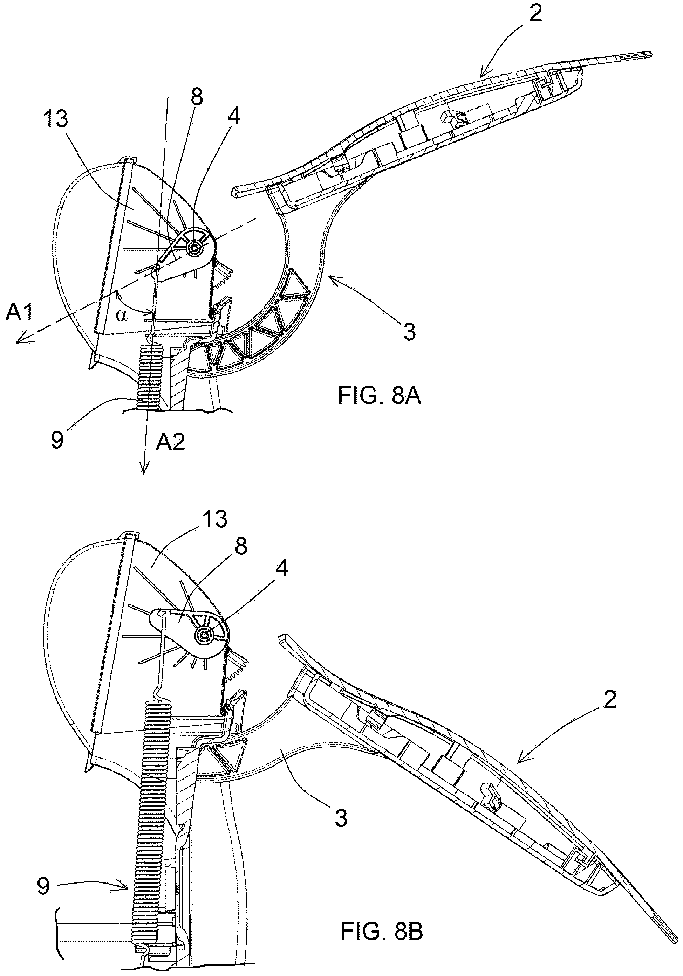

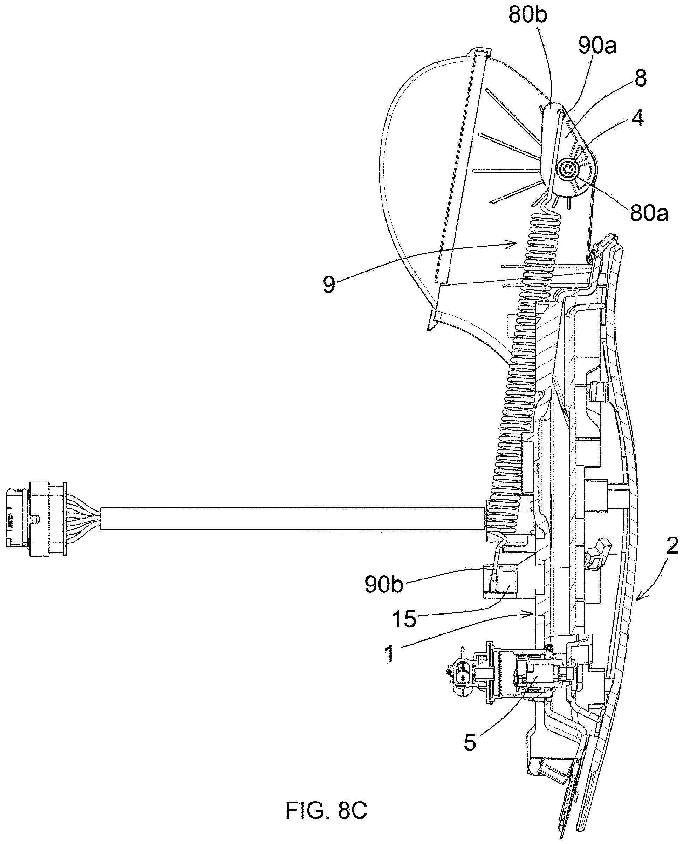

Figs. 8A, 8B and 8C illustrate the position of the lever (8) when the lid is open, semi-open and closed, respectively.

It should be considered that the spring (9) is a traction spring that works in traction.

With reference to Fig. 8A, the lever (8) has an axis (A1) passing through the fulcrum of the lever and the point where the spring (9) is attached. The spring (9) has an axis (A2) along which the traction force of the spring is developed. Between the axis (A1) of the lever (9) and the axis (A2) of the spring there is an angle (α) that varies during the movement of the lid (2).

The combination of the spring (9) with the lever (8) generates a progressively increasing traction force during the movement of the lid (2).

As a matter of fact, the highest traction force is not generated when the lid is closed, but it is generated when the angle (α) between the axis (A1) of the lever and the axis (A2) of the spring is equal to 90°. As the lid (2) is closed, the angle (α) between the axis (A1) of the lever and the axis (A2) of the spring exceeds 90° and the traction force of the spring (9) along the axis (A2) of the spring decreases (according to a parabolic curve).

When the lid (2) is closed (Fig. 8C), the angle (α) between the axis (A1) of the lever and the axis (A2) of the spring is equal to approximately 180°, and in such a case the spring (9) does not exert a high traction force on the actuator (5), thus protecting the actuator (5) from damage.

It should be considered that in the charge lid modules of the prior the traction spring is replaced with a torsion spring. When a torsion spring is used, the torsion force of the spring always increases during the movement of the lid to its closed position and the maximum torsion force is generated when the lid is closed. In fact, in such a case, in order to guarantee the full opening of the lid, the torsion spring must exert a high torsion force when the lid is closed. Such a high torsion force is unloaded on the actuator when the lid is closed.

## Claims

1. Charging socket module for an electrical vehicle, said module (100) comprising:
- a housing (1) with a bottom (10) wherein an electric charging connector connected to an electric power supply is installed for charging the vehicle's batteries,
- a lid (2) hinged to the housing (1) by means of a hinge (C) comprising a shaft (4) of an arm (3) which supports the lid (2); said shaft (4) being pivoted to a box (13) fixed to the housing in such a way to rotate around its axis (X) which is the axis of the hinge,
- an actuator (5) suitable for locking the lid (2) in closed position and for unlocking the lid (2) in order to open it, and
- a spring (9) that pushes the lid (2) to an open position,
**characterized by** the fact that it comprises a lever (8) which protrudes radially from the shaft (4) of the hinge, and by the fact that said spring (9) is a helical spring that works in traction, having a first end (90a) attached to said lever (8) and a second end (90b) attached to said housing of the module.

2. The module (100) according to claim 1, wherein said spring (9) extends under the bottom (10) of the housing, laterally with respect to a slot (12) in the housing that accommodates said electrical charging connector.

3. The module (100) according to claim 1 or 2, wherein said lever (8) has a first end (80a) fixed to the shaft (4) of the arm of the lid and a second end (80b) attached to the spring (9).

4. The module (100) according to any one of the preceding claims, comprising:
- a gear (6) mounted on the shaft (4), and
- a damper (7) mounted on said box of the hinge in such a way to mesh with the gear (6).

5. The module (100) according to claim 4, wherein the gear (6) comprises a gear wheel portion having a toothing (60) that extends for a central angle of 70-180°.

6. The module (100) according to claim 4 or 5, wherein said lever (8) and said gear (6) are disposed outside the box (13) of the hinge on opposite sides of the box (13) of the hinge.

7. The module (100) according to any one of claims 4 to 6, wherein the damper (7) comprises a gear wheel (70) having a smaller diameter than the diameter of the gear (6).

8. The module (100) according to any one of the preceding claims, wherein said arm (3) of the lid substantially has a curved C-shape, having a first end fixed to the lid (2) and a second end fixed to the shaft (4) of the hinge.

9. The module (100) according to any one of the preceding claims, wherein said actuator (5) comprises a roto-translating pin (50) having a T-shaped head (51) suitable for engaging in a seat (22) of the lid (2) to lock the lid in closed position; said roto-translating pin (50) being driven by an electric motor by means of a gear train; said roto-translating pin (5) being suitable for moving to an extracted open position, wherein the lid can be opened, and to a retracted closed position, wherein the lid is closed.
